# EUROPEAN PATENT APPLICATION

(11) **EP 3 972 375 A1**
(43) Date of publication of application: **23.03.2022**
(21) Application number: 19948026.0
(22) Date of filing: 30.09.2019
(51) Int. Cl.: H04W 74/02, H04W 74/00

(54) **RANDOM ACCESS CHANNEL TYPE SELECTION METHOD AND DEVICE**

(71) Applicant: GUANGDONG OPPO MOBILE TELECOMMUNICATIONS CORP., LTD., Dongguan, Guangdong 523860 (CN)
(72) Inventor: SHI, Cong, Dongguan, Guangdong 523860 (CN)
(74) Representative: Novagraaf Technologies
(86) International application number: PCT/CN2019/109707
(87) International publication number: WO 2021/062783

(57) **Abstract**

The present application provides a random access (RA) channel (RACH) type selection method and device. The method comprises : when only 2-step RA resources are configured for a currently activated first BWP of user equipment (UE), and a Reference Signal Received Power (RSRP) threshold for RACH type selection is preconfigured in a currently activated uplink BWP, determining whether a downlink path loss RSRP value measured by the UE is greater than the RSRP threshold for RACH type selection preconfigured in the currently activated uplink BWP; and if the UE detects that the downlink path loss RSRP value is greater than the RSRP threshold for RACH type selection preconfigured in the currently activated uplink BWP, the UE executing a 2-step RA process on the currently activated uplink BWP. In this way, implementation new-generation mobile communication technology is achieved, and a RACH type of UE is flexibly configured according to 2-step RA resources.

## Description

### TECHNICAL FIELD

The present application relates to the field of mobile communication technologies, and in particular to a method and device for random access channel RACH type selection.

### BACKGROUND

The fifth Generation Mobile Networks (5G) are the latest generation of cellular mobile communication technologies, which are also an extension of 4G, 3G and 2G systems. Performance goals of 5G are high data rates, reduced latency, energy savings, cost reduction, increased system capacity, and large-scale device connections.

With applications of 5G technology, random channel access technologies of user equipment have also developed. With 5G technologies, the realization of two-step random access channel has become a common requirement. However, in actual operations of such two-step random access channel, application situations are more diversified. Accordingly, how to realize a flexible configuration of the two-step random access channel RACH has become an urgent problem to be solved.

### SUMMARY

The present application aims to solve technical problems such as the lack of flexible configuration of the two-step random access channel in the related art at least to a certain extent.

In an aspect, embodiments of the present application provide a method for random access channel RACH type selection. The method comprises: determining, by a user equipment (UE), whether a downlink path loss reference signal received power (RSRP) value as measured is greater than a RSRP threshold for RACH type selection pre-configured in a currently activated uplink BWP, if a currently activated first BWP of the UE is configured with a two-step random access (2-step RA) resource rather than a four-step random access (4-step RA) resource; and executing, by the UE, a 2-step RA procedure on a currently activated uplink BWP, if the downlink path loss reference signal received power (RSRP) value measured by the UE is greater than the RSRP threshold for RACH type selection pre-configured in the currently activated uplink BWP.

In addition, the method for random access channel RACH type selection in embodiments of the present application includes at least the following additional technical features.

In an embodiment of the present application, after the determining, by the UE, whether the downlink path loss reference signal received power (RSRP) value as measured is greater than the RSRP threshold for RACH type selection pre-configured in the currently activated uplink BWP, the method further includes: switching, by the UE, to a second BWP configured with the two-step random access (2-step RA) resource and the four-step random access (4-step RA) resource for RACH type selection, if the downlink path loss reference signal received power (RSRP) value measured by the UE is lower than or equal to the RSRP threshold for RACH type selection pre-configured in the currently activated uplink BWP.

In an embodiment of the present application, the switching, by the UE, to the second BWP configured with the two-step random access (2-step RA) resource and the four-step random access (4-step RA) resource for RACH type selection includes: determining, by the UE, whether the downlink path loss reference signal received power (RSRP) value as measured is greater than a RSRP threshold for RACH type selection pre-configured in the second BWP; and executing, by the UE, the 2-step RA procedure on the second BWP, if the downlink path loss reference signal received power (RSRP) value measured by the user equipment is greater than the RSRP threshold for RACH type selection pre-configured in the second BWP.

In an embodiment of the present application, after the determining, by the UE, whether the downlink path loss reference signal received power (RSRP) value as measured is greater than the RSRP threshold for RACH type selection pre-configured in the second BWP, the method further includes: executing, by the UE, a 4-step RACH procedure on the second BWP, if the downlink path loss reference signal received power (RSRP) value measured by the UE is lower than or equal to the RSRP threshold for RACH type selection pre-configured in the second BWP.

In an embodiment of the present application, the switching, by the UE, to the second BWP configured with the two-step random access (2-step RA) resource and the four-step random access (4-step RA) resource for RACH type selection includes: executing, by the UE, a 4-step RACH procedure on the second BWP.

In an embodiment of the present application, the second BWP includes: an initial uplink BWP configured with the two-step random access (2-step RA) resource and the four-step random access (4-step RA) resource.

In an embodiment of the present application, after the determining, by the UE, whether the downlink path loss reference signal received power (RSRP) value as measured is greater than the RSRP threshold for RACH type selection pre-configured in the currently activated uplink BWP, the method further includes: switching, by the UE, to a second BWP configured with the four-step random access (4-step RA) resource rather than the two-step random access (2-step RA) resource to execute a 4-step RACH procedure, if the downlink path loss reference signal received power (RSRP) value measured by the user equipment is lower than or equal to the RSRP threshold for RACH type selection pre-configured in the currently activated uplink BWP.

In an embodiment of the present application, the second BWP includes: an initial uplink BWP configured with the four-step random access (4-step RA) resource rather than the two-step random access (2-step RA) resource.

In an embodiment of the present application, the method further includes: directly executing, by the UE, the 2-step RA procedure on the currently activated uplink BWP, if the currently activated first BWP of the UE is configured with the two-step random access (2-step RA) resource, and no RSRP threshold for RACH type selection is pre-configured in the currently activated uplink BWP.

In an embodiment of the present application, the method further includes: in response that the currently activated first BWP of the UE is configured with the two-step random access (2-step RA) resource rather than the 4-step RA resource, and that the RSRP threshold for RACH type selection is pre-configured in the currently activated uplink BWP, the UE ignoring the RSRP threshold and directly executing the 2-step RA procedure on the currently activated uplink BWP, or the UE executing the 2-step RA procedure on the currently activated first BWP after comparing the downlink path loss reference signal received power RSRP value as measured with the RSRP threshold.

In an embodiment of the present application, the method further includes: determining, by the UE, whether there is a target uplink BWP configured with the two-step random access (2-step RA) resource, if the currently activated first BWP of the UE is configured with the four-step random access (4-step RA) resource rather than the two-step random access (2-step RA) resource; determining, by the UE, whether the downlink path loss reference signal received power (RSRP) value as measured is greater than a RSRP threshold for RACH type selection configured in a 2-step RA resource of the target uplink BWP, if the UE has the target uplink BWP configured with the two-step random access (2-step RA) resource; and switching, by the UE, to the target uplink BWP to execute the 2-step RA procedure, if the downlink path loss reference signal received power (RSRP) value measured by the UE is greater than the RSRP threshold for RACH type selection configured in the 2-step RA resource of the target uplink BWP.

In an embodiment of the present application, after the determining, by the UE, whether the downlink path loss reference signal received power (RSRP) value as measured is greater than the RSRP threshold for RACH type selection configured in the 2-step RA resource of the target uplink BWP, the method further includes: executing, by the UE, a 4-step RACH procedure on the currently activated uplink BWP, if the downlink path loss reference signal received power (RSRP) value measured by the UE is lower than or equal to the RSRP threshold for RACH type selection configured in the 2-step RA resource of the target uplink BWP.

In an embodiment of the present application, after the determining, by the UE, whether there is the target uplink BWP configured with the two-step random access (2-step RA) resource, the method further includes: executing, by the UE, a 4-step RACH procedure on the currently activated uplink BWP, if the UE has no target uplink BWP configured with the two-step random access (2-step RA) resource.

In an embodiment of the present application, the target uplink BWP includes: an initial uplink BWP configured with the two-step random access (2-step RA) resource

In an embodiment of the present application, after the executing, by the UE, the 2-step RA procedure on the currently activated uplink BWP without executing a BWP handover process, the method further includes: directly triggering, by the UE, a RACH problem to be reported to a RRC layer, after N re-transmissions of 2-step RA msgA, so that the RRC layer triggers a RRC re-establishment process or triggers the UE to return to an IDLE state, where N is a preset threshold value.

In an embodiment of the present application, the method further includes: configuring the threshold value of N in the 2-step RA resource in advance.

In an embodiment of the present application, after the N re-transmissions of 2-step RA msgA, the method further includes: switching, by the UE, to the second BWP configured with the 4-step RA resource to execute the 4-step RACH procedure, and executing no state resetting process on a RACH counter so as to continue counting from N, wherein the RACH counter is a counter that records the number of random access preamble transmissions; and triggering, by the UE, the RACH problem, if the RACH counter indicates that the number of random access preamble transmissions is greater than or equal to a threshold value configured in the 4-step RA resource.

In an embodiment of the present application, after the N re-transmissions of 2-step RA msgA, the method further includes: switching, by the UE, to the second BWP configured with the 4-step RA resource to execute the 4-step RACH procedure, and performing a state resetting process on a RACH counter so as to continue counting from 0, wherein the RACH counter is a counter that records the number of random access preamble transmissions; and triggering, by the UE, the RACH problem to execute the RRC re-establishment process, if the RACH counter indicates that the number of random access preamble transmissions is greater than or equal to a threshold value configured in the 4-step RA resource.

In an embodiment of the present application, after the N re-transmissions of 2-step RA msgA, the method further includes: switching, by the UE, to the second BWP configured with the two-step random access (2-step RA) resource and the four-step random access (4-step RA) for RACH type selection; determining, by the UE, whether the downlink path loss reference signal received power (RSRP) value as measured is greater than the RSRP threshold for RACH type selection pre-configured in the second BWP; executing, by the UE, the 2-step RA procedure on the second BWP, if the downlink path loss reference signal received power (RSRP) value measured by the user equipment is greater than the RSRP threshold for RACH type selection pre-configured in the second BWP; and executing, by the UE, the 4-step RACH procedure on the second BWP, if the downlink path loss reference signal received power (RSRP) value measured by the user equipment is lower than or equal to the RSRP threshold for RACH type selection pre-configured in the second BWP.

In an embodiment of the present application, the second BWP includes an initial uplink BWP.

In an embodiment of the present application, the pre-configured RSRP threshold for RACH type selection includes: a RSRP threshold for RACH type selection which is received by the UE and configured by a network side in an uplink BWP with the 2-step RA resource; or a RSRP threshold for RACH type selection which is received by the UE and configured by broadcast in a system broadcast message.

In another aspect, embodiments of the present application provide a device for random access channel RACH type selection, which is applied to a user equipment UE. The device comprises: a determination module, configured to determine, by a user equipment (UE), whether a downlink path loss reference signal received power (RSRP) value as measured is greater than a RSRP threshold for RACH type selection pre-configured in a currently activated uplink BWP, if a currently activated first BWP of the UE is configured with a two-step random access (2-step RA) resource rather than a four-step random access (4-step RA) resource; and an execution module, configured to execute a 2-step RA procedure on the currently activated uplink BWP, if the downlink path loss reference signal received power (RSRP) value measured by the user equipment is greater than the RSRP threshold for RACH type selection pre-configured in the currently activated uplink BWP.

In addition, the device for random access channel type selection in embodiments of the present application includes at least the following additional technical features.

In an embodiment of the present application, the execution module is configured to: switch to a second BWP configured with the two-step random access (2-step RA) resource and the four-step random access (4-step RA) resource for RACH type selection, if the downlink path loss reference signal received power (RSRP) value measured by the UE is lower than or equal to the RSRP threshold for RACH type selection pre-configured in the currently activated uplink BWP.

In an embodiment of the present application, the first determination module is configured to: determine whether the downlink path loss reference signal received power (RSRP) value as measured is greater than a RSRP threshold for RACH type selection pre-configured in the second BWP; and execute the 2-step RA procedure on the second BWP, if the downlink path loss reference signal received power (RSRP) value measured by the user equipment is greater than the RSRP threshold for RACH type selection pre-configured in the second BWP.

In an embodiment of the present application, the execution module is configured to: execute a 4-step RACH procedure on the second BWP, if the downlink path loss reference signal received power (RSRP) value measured by the user equipment is lower than or equal to the RSRP threshold for RACH type selection pre-configured in the second BWP.

In an embodiment of the present application, the execution module is configured to execute a 4-step RACH procedure on the second BWP. In an embodiment of the present application, the execution module is configured to: switch to a second BWP configured with the four-step random access (4-step RA) resource rather than the two-step random access (2-step RA) resource to execute a 4-step RACH procedure, if the downlink path loss reference signal received power (RSRP) value measured by the user equipment is lower than or equal to the RSRP threshold for RACH type selection pre-configured in the currently activated uplink BWP.

In an embodiment of the present application, the execution module is configured to: in response that the currently activated first BWP of the UE is configured with the two-step random access (2-step RA) resource rather than the four-step random access (4-step RA) resource, and that the RSRP threshold for RACH type selection is pre-configured in the currently activated uplink BWP, ignore the RSRP threshold and directly execute the 2-step RA procedure on the currently activated uplink BWP, or execute the 2-step RA procedure on the currently activated first BWP after comparing the downlink path loss reference signal received power RSRP value as measured with the RSRP threshold.

In an embodiment of the present application, the execution module is configured to: determine whether there is a target uplink BWP configured with the two-step random access (2-step RA) resource, if the currently activated first BWP of the UE is configured with the four-step random access (4-step RA) resource rather than the two-step random access (2-step RA) resource. The execution module is configured to: switch to the target uplink BWP to execute the 2-step RA procedure, if the downlink path loss reference signal received power (RSRP) value measured by the UE is greater than a RSRP threshold for RACH type selection configured in a 2-step RA resource of the target uplink BWP.

In an embodiment of the present application, the execution module is configured to execute a 4-step RACH procedure on the currently activated uplink BWP, if the downlink path loss reference signal received power (RSRP) value measured by the UE is lower than or equal to the RSRP threshold for RACH type selection configured in the 2-step RA resource of the target uplink BWP.

In an embodiment of the present application, the device further includes: a reporting module, configured to: directly trigger a RACH problem to be reported to a RRC layer, after N re-transmissions of 2-step RA msgA, so that the RRC layer triggers a RRC re-establishment process or triggers the UE to return to an IDLE state, where N is a preset threshold value.

In an embodiment of the present application, the reporting module is configured to: switch to the second BWP configured with the 4-step RA resource to execute the 4-step RACH procedure, and perform no state resetting process on a RACH counter so as to continue counting from N, wherein the RACH counter is a counter that records the number of random access preamble transmissions; and trigger the RACH problem, if the RACH counter indicates that the number of random access preamble transmissions is greater than or equal to a threshold value configured in the 4-step RA resource.

In an embodiment of the present application, the reporting module is configured to: switch to the second BWP configured with the 4-step RA resource to execute the 4-step RACH procedure, and perform a state resetting process on a RACH counter so as to continue counting from 0, wherein the RACH counter is a counter that records the number of random access preamble transmissions; and trigger the RACH problem to execute the RRC re-establishment process, if the RACH counter indicates that the number of random access preamble transmissions is greater than or equal to a threshold value configured in the 4-step RA resource.

In an embodiment of the present application, the execution module is further configured to: switch to the second BWP configured with the two-step random access (2-step RA) resource and the four-step random access (4-step RA) for RACH type selection, after the N re-transmissions of 2-step RA msgA; determine whether the downlink path loss reference signal received power (RSRP) value as measured is greater than the RSRP threshold for RACH type selection pre-configured in the second BWP; execute the 2-step RA procedure on the second BWP, if the downlink path loss reference signal received power (RSRP) value measured by the user equipment is greater than the RSRP threshold for RACH type selection pre-configured in the second BWP; and execute the 4-step RACH procedure on the second BWP, if the downlink path loss reference signal received power (RSRP) value measured by the user equipment is lower than or equal to the RSRP threshold for RACH type selection pre-configured in the second BWP.

In an embodiment of the present application, the pre-configured RSRP threshold for RACH type selection includes: a RSRP threshold for RACH type selection which is received by the UE and configured by a network side in the uplink BWP with the 2-step RA resource; or a RSRP threshold for RACH type selection which is received by the UE and configured by broadcast in a system broadcast message.

In another aspect, embodiments of the present application provide a user equipment UE, including: a memory, a processor, and a computer program stored on the memory and capable of running on the processor, wherein the processor is configured to execute the computer program to implement the method for random access channel RACH type selection described in any of the foregoing embodiments.

In an embodiment of the present application, there is provided a non-transitory computer-readable storage medium having a computer program stored thereon, wherein the computer program, when executed by a processor, implements the method for random access channel RACH type selection described in any of the foregoing embodiments.

The embodiments provided in the present application include at least the following beneficial technical effects.

The currently activated first BWP of the user equipment (UE) is only configured with the two-step random access (2-step RA) resource, and a reference signal received power (RSRP) threshold for RACH type selection is pre-configured in the currently activated uplink BWP. In this case, if the downlink path loss reference signal received power (RSRP) value measured by the user equipment is greater than the RSRP threshold for RACH type selection pre-configured in the currently activated uplink BWP, the UE executes the 2-step RA procedure on the currently activated uplink BWP. Thus, the flexible configuration of the RACH type of the user equipment is achieved based on the 2-step RA resource in the new generation mobile communication technologies.

Additional aspects and advantages of the present application will be partly given in the following description, and some will become obvious from the following description, or be understood through the practice of the present application.

### BRIEF DESCRIPTION OF THE DRAWINGS

The above-mentioned and/or additional aspects and advantages of the present application will become apparent and easy to understand from the descriptions made to embodiments below in combination with the drawings, in which:

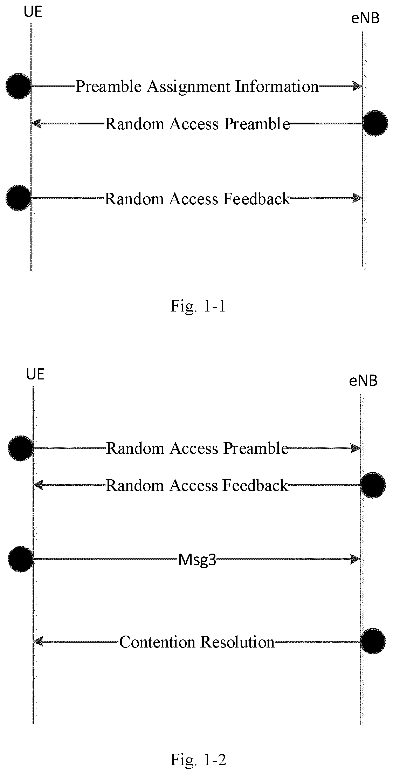

FIG. 1-1 is a schematic diagram of a four-step random access channel access procedure according to an embodiment of the present application;
FIG. 1-2 is a schematic diagram of a four-step random access channel access procedure according to another embodiment of the present application;
FIG. 2 is a flowchart of a method for random access channel type selection according to an embodiment of the present application;
FIG. 3 is a flowchart of a method for random access channel type selection according to another embodiment of the present application;
FIG. 4 is a schematic structural diagram of a device for random access channel type selection according to an embodiment of the present application; and
FIG. 5 is a schematic structural diagram of a device for random access channel type selection according to another embodiment of the present application.

### DETAILED DESCRIPTION OF THE EMBODIMENTS

Embodiments of the present application will be described below in detail. Examples of the embodiments are illustrated in the drawings and the same or similar reference signs always represent the same or similar components or components with the same or similar functions. The embodiments described below with reference to the drawings are exemplary and intended to explain the present application and should not be understood as limits to the present application.

The following describes a method and device for random access channel RACH type selection according to embodiments of the present application with reference to the accompanying drawings.

In order to better apply 5G technologies to improve communication efficiency, random channel access technologies should also be optimized accordingly. The present application specifically describes how to implement a flexible configuration of a RACH type of the user equipment based on a 2-step RA resource.

Before the method for random access channel RACH type selection of the present application is explained, some technical terms involved in the present application are first explained as follows.

Cell-Radio Network Temporary Identifier (C-RNTI) refers to a dynamic identifier assigned to the UE by a base station.

Evolved Node B (eNodeB) refers to a name of the base station.

Reference Signal Received Power (RSRP) refers to a key parameter that can represent strength of a wireless signal, and one of the measurement requirements of physical layer.

Random Access Channel (RACH) refers to an uplink transmission channel. RACH is received in an entire cell and is typically used for PAGING answer and MS calling/login access, or the like.

Bandwidth Part (BWP) refers to a subset bandwidth of a total bandwidth of a cell, which adjusts sizes of the UE receiving and sending bandwidths adaptively and flexibly through the bandwidth in NR, so that the UE receiving and sending bandwidths do not need to be as large as the bandwidth of the cell.

Initial Uplink BWP refers to a BWP of a cell where the UE is located when entering a RRC connected state from a RRC idle state.

Two-Step Random Access (2-step RA) means that the UE sends a message Msg1. If a UE identifier carried in the message Msg1 is the cell-radio network temporary identifier (C-RNTI), and the terminal receives a physical layer scheduling signaling for C-RNTI addressing, it is determined that the two-step random access of the terminal is successful.

Four-Step Random Access (4-step RA) is classified into a contention random access channel and a non-contention random access channel. As shown in FIG. 1-1, a four-step procedure in the non-contention random access channel is as follows. In a first step, the e-NodeB (eNB in the figure) configures a preamble and a PRA resource used by the UE during the random access procedure through a RRC signaling or a PDCCH. In a second step, the UE sends the preamble according to the configured preamble information to execute the random access. In a third step, the e-NodeB responds to the random access based on the received preamble information, and if it is allowed by the current load, the e-NodeB may send the RAR MAC PDU in which the SDU includes a preamble index used by the UE. The UE receives the RAR MAC PDU consistent with the preamble information in the second step, and thus the random access is completed.

As shown in FIG. 1-2, a four-step procedure in the contention random access channel is as follows. In a first step, the user equipment (UE) randomly selects the preamble and selects an available random access channel resource for transmission. In a second step, the e-NodeB responds to the random access according to a load condition, and if the preamble information used by the UE is included in the RAR MAC PDU as fed back, a third step can be executed. In the third step, the UE sends a MAC PDU according to an uplink grant received in the second step, and the PDU may contain the RRC signaling or the C-RNT1 before the UE according to the reason for initiating the random access. In a fourth step, contention resolution is executed. MAC entities of the UE and e-NodeB should both support the two random access methods. The random access procedure is closely connected with an uplink synchronization procedure and a downlink grant procedure. The e-NodeB side needs to uniformly consider the allocation of the uplink resource and the random access resource.

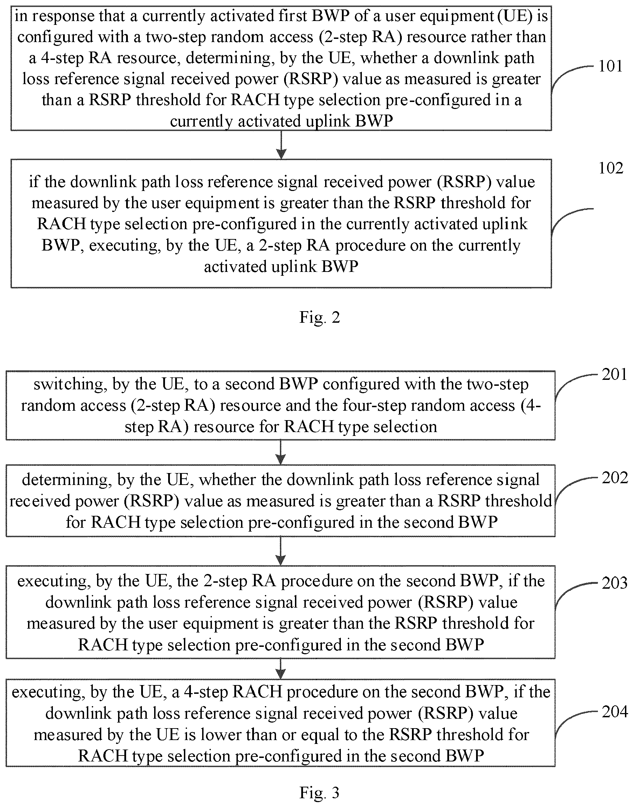

Specifically, FIG. 2 is a flowchart of a method for random access channel type selection according to an embodiment of the present application. As shown in FIG. 2, the method includes the following steps.

In step 101, if a currently activated first BWP of a user equipment (UE) is configured with a two-step random access (2-step RA) resource rather than a four-step random access (4-step RA) resource, the UE determines whether a downlink path loss reference signal received power (RSRP) value as measured is greater than a RSRP threshold for random access channel (RACH) type selection pre-configured in a currently activated uplink BWP.

It should be understood that in an embodiment, the currently activated first BWP of the user equipment (UE) is configured with the two-step random access (2-step RA) resource rather than the 4-step RA resource. It is obvious that, as analyzed above, because the two-step random access channel is more efficient than the four-step access channel, the implementation of the two-step random access channel is a way to improve the random channel access efficiency. Accordingly, it is preferable to consider using a 2-step RA resource for configuration of random access channel (RACH) type.

Therefore, the availability of the 2-step RA resource of the currently activated first BWP is first determined, and it is determined whether the downlink path loss reference signal received power (RSRP) value measured by the UE is greater than the RSRP threshold for RACH type selection pre-configured in the currently activated uplink BWP.

There are two configuration methods for the pre-configured RSRP threshold for RACH type selection. One configuration method is that the UE receives the RSRP threshold for RACH type selection configured by a network side in the uplink BWP with the 2-step RA resource. In this way, the RSRP threshold for RACH type selection corresponding to each BWP can be the same or different from each other. The other method is that the UE receives the RSRP threshold for RACH type selection configured by broadcast in a system broadcast message. No matter which uplink BWP is switched to, the RSRP threshold for RACH type selection configured by the broadcast in the system broadcast message is used as the current RSRP threshold for RACH type selection. Therefore, the RSRP threshold for RACH type selection corresponding to each uplink BWP is the same.

In step 102, if the downlink path loss reference signal received power (RSRP) value measured by the user equipment is greater than the RSRP threshold for RACH type selection pre-configured in the currently activated uplink BWP, the UE executes a 2-step RA procedure on the currently activated uplink BWP.

Specifically, if the downlink path loss reference signal received power (RSRP) value measured by the user equipment is greater than the RSRP threshold for RACH type selection pre-configured in the currently activated uplink BWP, it is obvious that currently the user equipment can execute a highly efficient 2-step RA procedure, and accordingly, the 2-step RA procedure is executed on the currently activated uplink BWP.

If the downlink path loss reference signal received power (RSRP) value measured by the UE is lower than or equal to the RSRP threshold for RACH type selection pre-configured in the currently activated uplink BWP, it is considered that the uplink BWP configured in the currently serving cell is not suitable for executing the corresponding 2-step RA procedure, etc., and accordingly, a second BWP can be used to implement RACH type selection.

The following describes how to use the second BWP to implement RACH type selection in combination with specific embodiments.

As a possible implementation, the UE is switched to the second BWP configured with the two-step random access (2-step RA) resource and the four-step random access (4-step RA) resource to for RACH type selection, in order to select the RACH type in the second BWP, and ensure the RACH type can be selected normally.

The second BWP includes: an initial uplink BWP configured with the two-step random access (2-step RA) resource and the four-step random access (4-step RA) resource, or an non-initial uplink BWP arbitrarily configured with the two-step random access (2-step RA) resource and the four-step random access (4-step RA) resource.

The following example illustrates how to switch the UE to the second BWP configured with the two-step random access (2-step RA) resource and the four-step random access channel (4-step RA) resource for RACH type selection.

### Example 1:

Specifically, in an embodiment, it is determined whether the downlink path loss reference signal received power (RSRP) value measured by the UE is greater than the RSRP threshold for RACH type selection pre-configured in the second BWP. That is, it is determined whether there are 2-step RA resources of other BWPs that can be executed based on the current network resource, so as to give priority to the efficiency of RACH type selection. In this case, it can be understood that the RSRP threshold for RACH type selection pre-configured in each BWP is different. If the downlink path loss reference signal received power (RSRP) value measured by the user equipment is greater than the RSRP threshold for RACH type selection pre-configured in the second BWP, the UE executes the 2-step RA procedure on the second BWP. That is, when there is an UL BWP that meets the execution requirements of the 2-step RA procedure, the 2-step RA procedure is executed base on the corresponding BWP, so as to ensure that the 2-step RA procedure can be selected as much as possible. Alternatively, the UE directly switches to a specific UL BWP, such as the initial UL BWP, on which the 2-step RA resource and the 4-step RA resource are configured. The UE determines whether the 2-step RA procedure can be executed on such UL BWP. If so, the UE executes the 2-step RA procedure, and if not, the UE executes the 4-step RA procedure.

In an embodiment, due to poor channel quality of the currently serving cell, requirements for the channel quality by the 2-step RA procedure of all UL BWPs or the initial UL BWP cannot be met, and the 4-step RACH procedure is returned for RACH type selection, so as to ensure the normal determination of the random channel and the normal execution of communication.

Specifically, if the downlink path loss reference signal received power (RSRP) value measured by the user equipment is lower than or equal to the RSRP threshold for RACH type selection pre-configured in the second BWP, the UE executes the 4-step RACH procedure on the second BWP. Here, the other UL BWP refers to the initial UL BWP.

### Example 2:

In an embodiment, the UE directly executes the 4-step RACH procedure on the second BWP in order to improve the efficiency of RACH selection and ensure rapid selection of the RACH type.

As another possible implementation, it is not difficult to understand that among the multiple BWPs corresponding to the UE, in addition to the BMP configured with the two-step random access (2-step RA) resource, and the second BWP configured with the two-step random access (2-step RA) resource and the four-step random access channel (4-step RA) resource, a second BWP only configured with the 4-step RA resource may also be included. The second BWP only configured with the 4-step RA resource may determine the RACH type of the UE, when the channel quality of the currently serving cell does not meet a condition of the currently activated first BWP for the selection of the 2-step RA procedure.

As another possible implementation, the UE directly switches to the initial UL BWP and executes the 4-step RA procedure on the initial uplink BWP. Here, the initial UL BWP may only be configured with the 4-step RA resource, or the initial UL BWP may be configured with both the 4-step RA resource and the 2-step RA resource. Even if the 2-step RA resource and the 4-step RA resource are configured, the UE will not execute the RACH type selection, but directly select the 4-step RA procedure.

Specifically, if the downlink path loss reference signal received power (RSRP) value measured by the user equipment is lower than or equal to the RSRP threshold for RACH type selection pre-configured in the currently activated uplink BWP, the UE switches to the second BWP only configured with the four-step random access (4-step RA) resource to execute the 4-step RACH procedure. The second BWP in an embodiment includes: an initial uplink BWP configured with only the 4-step RA resource, or any non-initial uplink BWP configured with only the 4-step RA resource.

In some embodiments, the currently activated first BWP is only configured with the two-step random access (2-step RA) resource, and the RSRP threshold for RACH type selection is pre-configured in the currently activated uplink BWP. In this case, different strategies for configuring the RACH type can be determined based on a magnitude relationship between the RSRP threshold and the downlink path loss reference signal received power (RSRP) value measured by the user equipment.

In an actual implementation process, in order to further improve the efficiency of configuring the RACH type, UE may also ignore the RSRP threshold for RACH type selection pre-configured in the currently activated uplink BWP, and directly execute the 2-step RA procedure on the currently activated uplink BWP, if the currently activated first BWP of the UE is only configured with the two-step random access (2-step RA) resource and the RSRP threshold for RACH type selection is pre-configured in the currently activated uplink BWP.

Alternatively, when the currently activated first BWP of the UE is only configured with the two-step random access (2-step RA) resource, and the RSRP threshold for RACH type selection is pre-configured in the currently activated uplink BWP, a relatively small RSRP threshold is preset, so that the RSRP threshold is smaller than the downlink path loss reference signal received power RSRP value measured by the UE in any situation. Thus, even if the UE executes the RACH type selection procedure (i.e., measuring RSRP and determining the relationship between RSRP and the threshold), it can only choose to execute the 2-step RA procedure.

Still alternatively, when the currently activated first BWP of the UE is only configured with the two-step random access (2-step RA) resource, and the RSRP threshold for RACH type selection is pre-configured in the currently activated uplink BWP, the 2-step RA procedure is executed on the currently activated first BWP after a comparison between the downlink path loss reference signal received power RSRP value as measured and the RSRP threshold. The comparison result is ignored, and the corresponding 2-step RA procedure is directly executed. In addition, if the downlink path loss reference signal received power RSRP value as measured is greater than the RSRP threshold, the comparison result can be used as a reference and the 2-step RA procedure is directly executed on the currently activated first BWP.

It should be emphasized that, in order to ensure the success rate of communication, for the operation that the UE ignores the RSRP threshold for RACH type selection pre-configured in the currently activated uplink BWP, some limitation conditions for the ignoring can also be set. For example, when the amount of information data to be sent is small, the UE can be controlled to ignore the RSRP threshold for RACH type selection pre-configured in the currently activated uplink BWP.

It is not difficult to understand that the resources configured for the currently activated first BWP of the UE are diverse. In an actual implementation process, the resources configured for the uplink operating bandwidth (BWP) have other possibilities. The present application also supports the RACH selection when the resource of the currently activated first BWP of the UE is of another type, so as to ensure the flexibility of RACH type selection in the present application.

In an embodiment of the present application, the currently activated first BWP of the UE is only configured with the four-step random access (4-step RA) resource. In an embodiment, when the currently activated first BWP of the UE is only configured with the four-step random access (4-step RA) resource, it is determined whether the UE has a target uplink BWP configured with the two-step random access (2-step RA) resource in order to ensure the efficiency of RACH type selection. If the UE has the target uplink BWP configured with the two-step random access (2-step RA) resource, it is determined whether the downlink path loss reference signal received power (RSRP) value measured by the UE is greater than the RSRP threshold for RACH type selection configured in the 2-step RA resource of the target uplink BWP. If the downlink path loss reference signal received power (RSRP) value measured by the UE is greater than the RSRP threshold for RACH type selection configured in the 2-step RA resource of the target uplink BWP, the UE switches to the target uplink BWP to execute the 2-step RA procedure.

The aforementioned target uplink BWP includes an initial uplink BWP configured with the two-step random access (2-step RA) resource, or any non-initial uplink BWP configured with the two-step random access (2-step RA) resource.

In an embodiment, if the downlink path loss reference signal received power (RSRP) value as measured is lower than or equal to the RSRP threshold for RACH type selection configured in the 2-step RA resource of the target uplink BWP, for example, a network resource of the currently serving cell does not support the network requirements of the 2-step RA procedure, the UE executes the 4-step RACH procedure on the currently activated uplink BWP in order to ensure the success rate of communication.

In an embodiment, it is possible that the UE has no target uplink BWP configured with the two-step random access (2-step RA) resource. In order to ensure the success of communication, the UE executes the 4-step RACH procedure on the currently activated uplink BWP.

Therefore, in some embodiments, no matter what RA resource is configured for the currently activated first BWP of the user equipment (UE), the RACH type access can be realized, which provides balance between the communication efficiency and the success rate of communication.

In summary, in the method for random access channel type selection of embodiments of the present application, when the currently activated first BWP of the user equipment (UE) is configured with the two-step random access (2-step RA) resource rather than the four-step random access (4-step RA) resource, it is determined whether the downlink path loss reference signal received power (RSRP) value measured by the UE is greater than the RSRP threshold for RACH type selection pre-configured in the currently activated uplink BWP. If the downlink path loss reference signal received power (RSRP) value measured by the user equipment is greater than the RSRP threshold for RACH type selection pre-configured in the currently activated uplink BWP, the UE executes the 2-step RA procedure on the currently activated uplink BWP. Thereby, the flexible configuration of the RACH type of the user equipment is achieved based on the 2-step RA resource in the new generation of mobile communication technologies.

Based on the above embodiments, it is not difficult to understand that when the current channel quality of the UE is poor, or multiple UEs preempts the RACH, there may be a problem of RACH failure. In a case of the RACH failure, how to ensure that the RACH connection can be re-implemented to ensure the success of communication is also a technical problem to be solved by the present application.

Specifically, in a case that the UE does not execute BWP handover, and after the 2-step RA procedure is executed on the currently activated uplink BWP, the method further includes: the UE directly triggering the RACH problem to be reported to the RRC layer after N re-transmissions of 2-step RA msgA, so that the RRC layer triggers the RRC re-establishment process or triggers the UE to return to the IDLE state, where N is a preset threshold value.

It should be emphasized that the N re-transmissions of 2-step RA msgA in embodiments of the present application can be understood as follows. When the 2-step RA procedure is executed, a first message in the 2-step RA procedure is sent, that is, MSGA. After that, the UE does not receive any network response, or even if it receives a network response, the UE considers that the 2-step RA is not completed (for example, receiving a transmission response of back-off to msg3, random back-off indication or decoding failure response), and this is MSGA transmission failure. The UE sends MSGA again on the next available MSGA resource. After attempting transmission of MSGA N times, the UE will not hand over the BWP, but will report a RACH problem to the upper layer.

N is the preset threshold value, which can be calibrated according to a large amount of experimental data. In an actual implementation process, the threshold value of N can be configured in the 2-step RA resource in advance. In addition, it can also be configured in other locations, which is not limited here.

Specifically, after the N re-transmissions of 2-step RA msgA, the UE directly triggers the RACH problem to be reported to the RRC layer, so that the RRC layer triggers the RRC re-establishment process or triggers the UE to return to the IDLE state for releasing related information, for example, RRC connection release, RL release, BIU port release, RL release, RRC connection release, etc.

It should be noted that the re-transmission state can be counted based on a RACH counter. In different application scenarios, the RACH processing ways are different based on the RACH counter. Examples are as follows.

### Example 1:

In an example, after the N re-transmissions of 2-step RA msgA, the UE switches to the second BWP configured with the 4-step RA resource to execute the 4-step RACH procedure, and does not reset state of the RACH counter, i.e., the counting continues from N. When the RACH counter indicates that the number of random access preamble transmissions is greater than or equal to the threshold value configured in the 4-step RA resource, it is considered that a RACH procedure problem has indeed occurred. Therefore, the UE triggers the RACH problem, and an alarm can be given or alarm information can be sent to relevant technicians to quickly repair the problem. The RACH counter is a counter that records the number of random access preamble transmissions.

In an embodiment, the counter is PREAMBLE_TRANSMISSION_COUNTER. When the PREAMBLE_TRANSMISSION_COUNTER is greater than or equal to the threshold value configured in the 4-step RA resource, the UE triggers the RACH problem.

### Example 2:

In an example, after the N re-transmissions of 2-step RA msgA, the UE switches to the second BWP configured with the 4-step RA resource to execute the 4-step RACH procedure, and resets state of the RACH counter, i.e., the counting continues from 0. When the RACH counter indicates that the number of random access preamble transmissions is greater than or equal to the threshold value configured in the 4-step RA resource, the UE triggers the RACH problem and the RRC re-establishment process occurs. That is, the RRC is re-established at this time.

The counter is PREAMBLE_TRANSMISSION_COUNTER. When the PREAMBLE_TRANSMISSION_COUNTER is greater than or equal to the threshold value configured in the 4-step RA resource, the UE triggers the RACH problem. That is, the RRC re-establishment process occurs.

In an embodiment of the present application, after the N re-transmissions of 2-step RA msgA, the configuration of the RACH type can also be implemented. Specifically, as shown in FIG. 3, the above method further includes the following steps.

In step 201, the UE switches to the second BWP configured with the two-step random access (2-step RA) resource and the four-step random access channel (4-step RA) resource for RACH type selection.

The second BWP includes the initial uplink BWP, and may also include other non-initial uplink BWPs arbitrarily configured with the two-step random access (2-step RA) resource and the four-step random access channel (4-step RA) resource.

Specifically, in order to ensure the success of RACH selection, the UE switches to the second BWP configured with the two-step random access (2-step RA) resource and the four-step random access channel (4-step RA) resource for RACH type selection.

In step 202, it is determined whether the downlink path loss reference signal received power (RSRP) value measured by the UE is greater than the RSRP threshold for RACH type selection pre-configured in the second BWP.

Specifically, it is determined whether the downlink path loss reference signal received power (RSRP) value measured by the UE is greater than the RSRP threshold for RACH type selection pre-configured in the second BWP, so as to preliminarily determine whether the current RACH selection failure is due to too demanding requirements of the network resource.

In step 203, if the downlink path loss reference signal received power (RSRP) value measured by the user equipment is greater than the RSRP threshold for RACH type selection pre-configured in the second BWP, the UE executes the 2-step RA procedure on the second BWP.

Specifically, if the downlink path loss reference signal received power (RSRP) value measured by the user equipment is greater than the RSRP threshold for RACH type selection pre-configured in the second BWP, the UE executes the 2-step RA procedure on the second BWP. That is, the 2-step RA procedure is executed on the second BWP with the low requirement for the network resource, thereby taking into account both the success rate and efficiency of communication.

In step 204, if the downlink path loss reference signal received power (RSRP) value measured by the user equipment is lower than or equal to the RSRP threshold for RACH type selection pre-configured in the second BWP, the UE executes the 4-step RACH procedure on the second BWP.

Specifically, if the downlink path loss reference signal received power (RSRP) value measured by the user equipment is lower than or equal to the RSRP threshold for RACH type selection pre-configured in the second BWP, the communication success rate is prioritized into consideration so as to ensure rapid selection of the RACH type, and the UE executes the 4-step RACH procedure with the lower requirement for the network resource on the second BWP.

In summary, in the method for random access channel type selection of embodiments of the present application, a successful connection to the RA resource can still be achieved, after attempting on the current 2-step RA resource N times, ensuring the success rate of communication.

In order to implement the above-mentioned embodiments, the present application also proposes a device for random access channel type selection, which is applied to the user equipment.

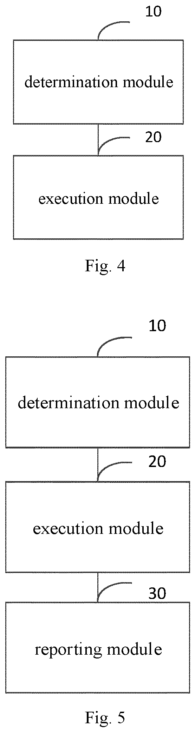

FIG. 4 is a schematic structural diagram of a device for random access channel type selection according to an embodiment of the present application. As shown in FIG. 4, the device includes: a determination module 10 and an execution module 20.

The determination module 10 is configured to determine, by a user equipment (UE), whether a downlink path loss reference signal received power (RSRP) value as measured is greater than a RSRP threshold for RACH type selection pre-configured in a currently activated uplink BWP, if a currently activated first BWP of the UE is configured with a two-step random access (2-step RA) resource rather than a four-step random access (4-step RA) resource.

The execution module 20 is configured to execute a 2-step RA procedure on the currently activated uplink BWP, if the downlink path loss reference signal received power (RSRP) value measured by the user equipment is greater than the RSRP threshold for RACH type selection pre-configured in the currently activated uplink BWP.

In an embodiment of the present application, the execution module 20 is configured to switch to a second BWP configured with the two-step random access (2-step RA) resource and the four-step random access (4-step RA) resource for RACH type selection, if the downlink path loss reference signal received power (RSRP) value measured by the UE is lower than or equal to the RSRP threshold for RACH type selection pre-configured in the currently activated uplink BWP.

In an embodiment, the determination module 10 includes a first determination module, which is configured to: determine whether the downlink path loss reference signal received power (RSRP) value as measured is greater than a RSRP threshold for RACH type selection pre-configured in the second BWP; and execute the 2-step RA procedure on the second BWP, if the downlink path loss reference signal received power (RSRP) value measured by the user equipment is greater than the RSRP threshold for RACH type selection pre-configured in the second BWP.

In an embodiment of the present application, the execution module 10 is configured to: execute a 4-step RACH procedure on the second BWP, if the downlink path loss reference signal received power (RSRP) value measured by the user equipment is lower than or equal to the RSRP threshold for RACH type selection pre-configured in the second BWP.

In an embodiment of the present application, the execution module 20 is configured to: execute a 4-step RACH procedure on the second BWP.

In an embodiment of the present application, the execution module 20 is configured to: switch to a second BWP configured with the four-step random access (4-step RA) resource rather than the two-step random access (2-step RA) resource to execute a 4-step RACH procedure, if the downlink path loss reference signal received power (RSRP) value measured by the user equipment is lower than or equal to the RSRP threshold for RACH type selection pre-configured in the currently activated uplink BWP.

In an embodiment of the present application, the execution module 20 is configured to: directly execute the 2-step RA procedure on the currently activated uplink BWP, if the currently activated first BWP of the UE is configured with the two-step random access (2-step RA) resource, and no RSRP threshold for RACH type selection is pre-configured in the currently activated uplink BWP.

In an embodiment of the present application, the execution module 20 is configured to: ignore the RSRP threshold and directly execute the 2-step RA procedure on the currently activated uplink BWP, or execute the 2-step RA procedure on the currently activated first BWP after comparing the downlink path loss reference signal received power RSRP value as measured with the RSRP threshold, if the currently activated first BWP of the UE is configured only with the two-step random access (2-step RA) resource, and the RSRP threshold for RACH type selection is pre-configured in the currently activated uplink BWP, wherein the RSRP threshold is smaller than the downlink path loss reference signal received power RSRP value measured by the UE under any instance.

In an embodiment of the present application, the determination module 10 is configured to: determine whether there is a target uplink BWP configured with the two-step random access (2-step RA) resource, if the currently activated first BWP of the UE is configured with the four-step random access (4-step RA) resource rather than the two-step random access (2-step RA) resource.

The execution module is configured to: switch to the target uplink BWP to execute the 2-step RA procedure, if the downlink path loss reference signal received power (RSRP) value measured by the UE is greater than a RSRP threshold for RACH type selection configured in a 2-step RA resource of the target uplink BWP.

In an embodiment of the present application, the execution module 20 is configured to: execute a 4-step RACH procedure on the currently activated uplink BWP, if the downlink path loss reference signal received power (RSRP) value measured by the UE is lower than or equal to the RSRP threshold for RACH type selection configured in the 2-step RA resource of the target uplink BWP.

In an embodiment of the present application, the execution module 20 is configured to: execute a 4-step RACH procedure on the currently activated uplink BWP, if the UE has no target uplink BWP configured with the two-step random access (2-step RA) resource.

It should be noted that the foregoing explanation of embodiments of the method for random access channel type selection is also applicable to the device for random access channel type selection device of the above embodiments, and will not be repeated here.

In summary, in the device for random access channel type selection of embodiments of the present application, when the currently activated first BWP of the user equipment (UE) is configured with the two-step random access (2-step RA) resource rather than the 4-step RA resource, it is determined whether the downlink path loss reference signal received power (RSRP) value measured by the UE is greater than the RSRP threshold for RACH type selection pre-configured in the currently activated uplink BWP. If the downlink path loss reference signal received power (RSRP) value measured by the user equipment is greater than the RSRP threshold for RACH type selection pre-configured in the currently activated uplink BWP, the UE executes the 2-step RA procedure on the currently activated uplink BWP, thereby realizing the flexible configuration of the RACH type of the user equipment based on the 2-step RA resource in the new generation of mobile communication technologies.

Based on the above embodiments, it is not difficult to understand that when the network is unstable, or multiple UEs preempt the RACH, there may be a problem of RACH selection failure. In a case of the RACH selection failure, how to ensure that the RACH connection can be re-implemented to ensure the success of communication is also a technical problem to be solved by the present application.

Specifically, as shown in FIG. 5, based on the above-mentioned FIG. 4, the device further includes: a reporting module 30.

The reporting module 30 is configured to directly trigger a RACH problem to be reported to a RRC layer, after N re-transmissions of 2-step RA msgA, so that the RRC layer triggers a RRC re-establishment process or triggers the UE to return to an IDLE state, where N is a preset threshold value.

In an embodiment of the present application, the reporting module 30 is configured to: switch to the second BWP configured with the 4-step RA resource to execute the 4-step RACH procedure, and execute no state resetting on a RACH counter so as to continue counting from N, wherein the RACH counter is a counter that records the number of random access preamble transmissions; and trigger the RACH problem if the RACH counter indicates that the number of random access preamble transmissions is greater than or equal to a threshold value configured in the 4-step RA resource.

In an embodiment of the present application, the reporting module 30 is configured to: switch to the second BWP configured with the 4-step RA resource to execute the 4-step RACH procedure, and perform a state resetting process on a RACH counter so as to continue counting from 0, wherein the RACH counter is a counter that records the number of random access preamble transmissions; and trigger the RACH problem to execute the RRC re-establishment process, if the RACH counter indicates that the number of random access preamble transmissions is greater than or equal to a threshold value configured in the 4-step RA resource.

In an embodiment of the present application, the execution module 20 is further configured to: switch to the second BWP configured with the two-step random access (2-step RA) resource and the four-step random access (4-step RA) for RACH type selection after the N retransmissions of 2-step RA msgA; determine whether the downlink path loss reference signal received power (RSRP) value as measured is greater than the RSRP threshold for RACH type selection pre-configured in the second BWP; execute the 2-step RA procedure on the second BWP, if the downlink path loss reference signal received power (RSRP) value measured by the user equipment is greater than the RSRP threshold for RACH type selection pre-configured in the second BWP; and execute the 4-step RACH procedure on the second BWP, if the downlink path loss reference signal received power (RSRP) value measured by the user equipment is lower than or equal to the RSRP threshold for RACH type selection pre-configured in the second BWP.

It should be noted that the foregoing explanation of embodiments of the method for random access channel type selection is also applicable to the device for random access channel type selection of the above-mentioned embodiments, and will not be repeated here.

In summary, in the device for random access channel type selection of embodiments of the present application, a successful connection to the RA resource can still be achieved after attempting on the current 2-step RA resource N times, ensuring the success rate of communication.

In order to implement the foregoing embodiments, the present application also proposes a user equipment, including: a memory, a processor, and a computer program stored on the memory and capable of running on the processor. The processor implements the method for random access channel type selection described in the foregoing embodiments when executing the computer program.

In order to implement the above-mentioned embodiments, the present application also proposes a non-transitory computer-readable storage medium, and instructions in the storage medium, when executed by a processor, implements the method for random access channel type selection described in the foregoing embodiments.

In the description of the present specification, the description with reference to the terms "one embodiment", "some embodiments", "example", "specific example", or "some examples", and the like, means that a specific feature, structure, material, or characteristic described in connection with the embodiment or example is included in at least one embodiment or example of the present application. The illustrative descriptions of the terms throughout the present specification are not necessarily referring to the same embodiment or example. Furthermore, the specific features, structures, materials, or characteristics described may be combined in any suitable manner in one or more embodiments or examples. In addition, various embodiments or examples described in the present specification and features of various embodiments or examples, may be incorporated and combined by those skilled in the art in case of an absence of confliction.

In addition, the terms "first" and "second" are only used for descriptive purposes, and should not be understood as indicating or implying relative importance or implicitly indicating the number of indicated technical features. Therefore, a feature defined with "first" and "second" may explicitly or implicitly include at least one such feature. In the description of the present application, "a plurality of" means at least two, such as two, three, etc., unless specifically defined otherwise.

## Claims

1. A method for random access channel RACH type selection, comprising:
determining, by a user equipment UE, whether a downlink path loss reference signal received power RSRP value as measured is greater than a RSRP threshold for RACH type selection pre-configured in a currently activated uplink Bandwidth Part BWP, if a currently activated first BWP of the UE is configured with a two-step random access 2-step RA resource rather than a four-step random access 4-step RA resource; and
executing, by the UE, a 2-step RA procedure on the currently activated uplink BWP, if the downlink path loss reference signal received power RSRP value measured by the user equipment is greater than the RSRP threshold for RACH type selection pre-configured in the currently activated uplink BWP.

2. The method according to claim 1, wherein after the determining, by the UE, whether the downlink path loss reference signal received power RSRP value as measured is greater than the RSRP threshold for RACH type selection pre-configured in the currently activated uplink BWP, the method further comprises:
switching, by the UE, to a second BWP configured with the 2-step RA resource and the 4-step RA resource for RACH type selection, if the downlink path loss reference signal received power RSRP value measured by the UE is lower than or equal to the RSRP threshold for RACH type selection pre-configured in the currently activated uplink BWP.

3. The method according to claim 2, wherein the switching, by the UE, to the second BWP configured with the 2-step RA resource and the 4-step RA resource for RACH type selection comprises:
determining, by the UE, whether the downlink path loss reference signal received power RSRP value as measured is greater than a RSRP threshold for RACH type selection pre-configured in the second BWP; and
executing, by the UE, the 2-step RA procedure on the second BWP, if the downlink path loss reference signal received power RSRP value measured by the user equipment is greater than the RSRP threshold for RACH type selection pre-configured in the second BWP.

4. The method according to claim 3, wherein after the determining, by the UE, whether the downlink path loss reference signal received power RSRP value as measured is greater than the RSRP threshold for RACH type selection pre-configured in the second BWP, the method further comprises:
executing, by the UE, a 4-step RACH procedure on the second BWP, if the downlink path loss reference signal received power RSRP value measured by the UE is lower than or equal to the RSRP threshold for RACH type selection pre-configured in the second BWP.

5. The method according to claim 2, wherein the switching, by the UE, to the second BWP configured with the 2-step RA resource and the 4-step RA resource to for RACH type selection comprises:
executing, by the UE, a 4-step RACH procedure on the second BWP.

6. The method according to claim 2, wherein the second BWP comprises: an initial uplink BWP configured with the 2-step RA resource and the 4-step RA resource.

7. The method according to claim 1, wherein after the determining, by the UE, whether the downlink path loss reference signal received power RSRP value as measured is greater than the RSRP threshold for RACH type selection pre-configured in the currently activated uplink BWP, the method further comprises:
switching, by the UE, to a second BWP configured with the 4-step RA resource rather than the 2-step RA resource to execute a 4-step RACH procedure, if the downlink path loss reference signal received power RSRP value measured by the user equipment is lower than or equal to the RSRP threshold for RACH type selection pre-configured in the currently activated uplink BWP.

8. The method according to claim 7, wherein the second BWP comprises an initial uplink BWP configured with the 4-step RA resource rather than the 2-step RA resource.

9. The method according to claim 1, further comprising:
directly executing, by the UE, the 2-step RA procedure on the currently activated uplink BWP, if the currently activated first BWP of the UE is configured with the 2-step RA resource, and no RSRP threshold for RACH type selection is pre-configured in the currently activated uplink BWP.

10. The method according to claim 1, further comprising:
in response that the currently activated first BWP of the UE is configured with the 2-step RA resource rather than the 4-step RA resource, and that the RSRP threshold for RACH type selection is pre-configured in the currently activated uplink BWP, the UE ignoring the RSRP threshold and directly executing the 2-step RA procedure on the currently activated uplink BWP, or the UE executing the 2-step RA procedure on the currently activated first BWP after comparing the downlink path loss reference signal received power RSRP value as measured with the RSRP threshold.

11. The method according to claim 1, further comprising:
determining, by the UE, whether there is a target uplink BWP configured with the 2-step RA resource, if the currently activated first BWP of the UE is configured with the 4-step RA resource rather than the 2-step RA resource;
determining, by the UE, whether the downlink path loss reference signal received power RSRP value as measured is greater than a RSRP threshold for RACH type selection configured in a 2-step RA resource of the target uplink BWP, if the UE has the target uplink BWP configured with the 2-step RA resource; and
switching, by the UE, to the target uplink BWP to execute the 2-step RA procedure, if the downlink path loss reference signal received power RSRP value measured by the UE is greater than the RSRP threshold for RACH type selection configured in the 2-step RA resource of the target uplink BWP.

12. The method according to claim 11, wherein after the determining, by the UE, whether the downlink path loss reference signal received power RSRP value as measured is greater than the RSRP threshold for RACH type selection configured in the 2-step RA resource of the target uplink BWP, the method further comprises:
executing, by the UE, a 4-step RACH procedure on the currently activated uplink BWP, if the downlink path loss reference signal received power RSRP value measured by the UE is lower than or equal to the RSRP threshold for RACH type selection configured in the 2-step RA resource of the target uplink BWP.

13. The method according to claim 11, wherein after the determining, by the UE, whether there is the target uplink BWP configured with the 2-step RA resource, the method further comprises:
executing, by the UE, a 4-step RACH procedure on the currently activated uplink BWP, if the UE has no target uplink BWP configured with the 2-step RA resource.

14. The method according to claim 11, wherein the target uplink BWP comprises: an initial uplink BWP configured with the 2-step RA resource.

15. The method according to any one of claims 1-14, wherein after the executing, by the UE, the 2-step RA procedure on the currently activated uplink BWP without executing a BWP handover process, the method further comprises:
directly triggering, by the UE, a RACH problem to be reported to a RRC layer, after N re-transmissions of 2-step RA msgA, so that the RRC layer triggers a RRC re-establishment process or triggers the UE to return to an IDLE state, where N is a preset threshold value.

16. The method according to claim 15, further comprising:
configuring the threshold value of N in the 2-step RA resource in advance.

17. The method according to claim 15, wherein after the executing, by the UE, the 2-step RA procedure on the currently activated uplink BWP without executing a BWP handover process, the method further comprises:
the UE switching to the second BWP configured with the 4-step RA resource to execute a 4-step RACH procedure and performing no state resetting process on a RACH counter so as to continue counting from N, wherein the RACH counter is a counter that records the number of random access preamble transmissions; and
triggering, by the UE, the RACH problem, if the RACH counter indicates that the number of random access preamble transmissions is greater than or equal to a threshold value configured in the 4-step RA resource.

18. The method according to claim 15, wherein after the N re-transmissions of 2-step RA msgA, the method further comprises:
the UE switching to the second BWP configured with the 4-step RA resource to execute a 4-step RACH procedure and performing a state resetting process on a RACH counter to so as to continue counting from 0, wherein the RACH counter is a counter that records the number of random access preamble transmissions; and
triggering, by the UE, the RACH problem to execute a RRC re-establishment process, if the RACH counter indicates that the number of random access preamble transmissions is greater than or equal to a threshold value configured in the 4-step RA resource.

19. The method according to claim 15, wherein after the N re-transmissions of 2-step RA msgA, the method further comprises:
switching, by the UE, to a second BWP configured with the 2-step RA resource and the 4-step RA resource for RACH type selection;
determining, by the UE, whether the downlink path loss reference signal received power RSRP value as measured is greater than the RSRP threshold for RACH type selection pre-configured in the second BWP;
executing, by the UE, a 2-step RA procedure on the second BWP, if the downlink path loss reference signal received power RSRP value measured by the user equipment is greater than the RSRP threshold for RACH type selection pre-configured in the second BWP; and
executing, by the UE, a 4-step RACH procedure on the second BWP, if the downlink path loss reference signal received power RSRP value measured by the user equipment is lower than or equal to the RSRP threshold for RACH type selection pre-configured in the second BWP.

20. The method according to any one of claims 17-19, wherein the second BWP comprises an initial uplink BWP.

21. The method according to any one of claims 1-20, wherein the pre-configured RSRP threshold for RACH type selection comprises:
a RSRP threshold for RACH type selection, which is received by the UE and configured by a network side in an uplink BWP with the 2-step RA resource; or
a RSRP threshold for RACH type selection, which is received by the UE and configured by broadcast in a system broadcast message.

22. A device for random access channel RACH type selection, applied to a user equipment UE, and comprising:
a determination module, configured to determine, by the UE, whether a downlink path loss reference signal received power RSRP value as measured is greater than a RSRP threshold for RACH type selection pre-configured in a currently activated uplink Bandwidth Part BWP, if a currently activated first BWP of the UE is configured with a two-step random access 2-step RA resource rather than a four-step random access 4-step RA resource; and
an execution module, configured to execute a 2-step RA procedure on the currently activated uplink BWP, if the downlink path loss reference signal received power RSRP value measured by the user equipment is greater than the RSRP threshold for RACH type selection pre-configured in the currently activated uplink BWP.

23. The device according to claim 22, wherein the execution module is configured to:
switch to a second BWP configured with the 2-step RA resource and the 4-step RA resource for RACH type selection, if the downlink path loss reference signal received power RSRP value measured by the UE is lower than or equal to the RSRP threshold for RACH type selection pre-configured in the currently activated uplink BWP.

24. The device according to claim 23, wherein the first determination module is configured to:
determine whether the downlink path loss reference signal received power RSRP value as measured is greater than a RSRP threshold for RACH type selection pre-configured in the second BWP; and
execute a 2-step RA procedure on the second BWP, if the downlink path loss reference signal received power RSRP value measured by the user equipment is greater than the RSRP threshold for RACH type selection pre-configured in the second BWP.

25. The device according to claim 23, wherein the execution module is configured to:
execute a 4-step RACH procedure on the second BWP, if the downlink path loss reference signal received power RSRP value measured by the user equipment is lower than or equal to the RSRP threshold for RACH type selection pre-configured in the second BWP.

26. The device according to claim 23, wherein the execution module is configured to:
execute a 4-step RACH procedure on the second BWP.

27. The device according to claim 22, wherein the execution module is configured to:
switch to a second BWP configured with the 4-step RA resource rather than the 2-step RA resource to execute a 4-step RACH procedure, if the downlink path loss reference signal received power RSRP value measured by the user equipment is lower than or equal to the RSRP threshold for RACH type selection pre-configured in the currently activated uplink BWP.

28. The device according to claim 22, wherein the execution module is configured to:
directly execute the 2-step RA procedure on the currently activated uplink BWP, if the currently activated first BWP of the UE is configured with the 2-step RA resource, and no RSRP threshold for RACH type selection is pre-configured in the currently activated uplink BWP.

29. The device according to claim 22, wherein the execution module is configured to:
ignore the RSRP threshold and directly execute the 2-step RA procedure on the currently activated uplink BWP, or execute the 2-step RA procedure on the currently activated first BWP after comparing the downlink path loss reference signal received power RSRP value as measured with the RSRP threshold, if the currently activated first BWP of the UE is configured with the 2-step RA resource rather than the 4-step RA resource, and the RSRP threshold for RACH type selection is pre-configured in the currently activated uplink BWP.

30. The device according to claim 22, wherein
the determination module is configured to:
determine whether there is a target uplink BWP configured with the 2-step RA resource, if the currently activated first BWP of the UE is configured with the 4-step RA resource rather than the 2-step RA resource; and
the execution module is configured to:
switch to the target uplink BWP to execute the 2-step RA procedure, if the downlink path loss reference signal received power RSRP value measured by the UE is greater than a RSRP threshold for RACH type selection configured in a 2-step RA resource of the target uplink BWP.

31. The device according to claim 30, wherein the execution module is configured to:
execute a 4-step RACH procedure on the currently activated uplink BWP, if the downlink path loss reference signal received power RSRP value measured by the UE is lower than or equal to the RSRP threshold for RACH type selection configured in the 2-step RA resource of the target uplink BWP.

32. The device according to claim 30, wherein the execution module is configured to:
execute a 4-step RACH procedure on the currently activated uplink BWP, if the UE has no target uplink BWP configured with the 2-step RA resource.

33. The device according to any one of claims 22-32, further comprising:
a reporting module, configured to directly trigger, by the UE, a RACH problem to be reported to a RRC layer after N re-transmissions of 2-step RA msgA, so that the RRC layer triggers a RRC re-establishment process or triggers the UE to return to an IDLE state, where N is a preset threshold value.

34. The device according to claim 33, wherein the reporting module is configured to:
switch to a second BWP configured with the 4-step RA resource to execute a 4-step RACH procedure, and perform no state resetting process on a RACH counter so as to continue counting from N, wherein the RACH counter is a counter that records the number of random access preamble transmissions; and
trigger the RACH problem, if the RACH counter indicates that the number of random access preamble transmissions is greater than or equal to a threshold value configured in the 4-step RA resource.

35. The device according to claim 33, wherein the reporting module is configured to:
switch to a second BWP configured with the 4-step RA resource to execute a 4-step RACH procedure, and perform a state resetting process on a RACH counter so as to continue counting from 0, wherein the RACH counter is a counter that records the number of random access preamble transmissions; and
trigger the RACH problem to execute the RRC re-establishment process, if the RACH counter indicates that the number of random access preamble transmissions is greater than or equal to a threshold value configured in the 4-step RA resource.

36. The device according to claim 33, wherein the execution module is further configured to:
switch to a second BWP configured with the 2-step RA resource and the 4-step RA resource for RACH type selection after the N re-transmissions of 2-step RA msgA;
determine whether the downlink path loss reference signal received power RSRP value as measured is greater than the RSRP threshold for RACH type selection pre-configured in the second BWP;
execute the 2-step RA procedure on the second BWP, if the downlink path loss reference signal received power RSRP value measured by the user equipment is greater than the RSRP threshold for RACH type selection pre-configured in the second BWP; and
execute the 4-step RACH procedure on the second BWP, if the downlink path loss reference signal received power RSRP value measured by the user equipment is lower than or equal to the RSRP threshold for RACH type selection pre-configured in the second BWP.

37. The device according to any one of claims 22-36, wherein the pre-configured RSRP threshold for RACH type selection comprises:
a RSRP threshold for RACH type selection, which is received by the UE and configured by a network side in the uplink BWP with the 2-step RA resource; or
a RSRP threshold for RACH type selection, which is received by the UE and configured by broadcast in a system broadcast message.

38. A user equipment UE, comprising:
a memory;
a processor; and
a computer program, stored in the memory and configured to run on the processor,
wherein the processor is configured to execute the computer program to implement the method for random access channel RACH type selection according to any one of claims 1-21.

39. A non-transitory computer-readable storage medium having a computer program stored thereon, wherein the computer program, when executed by a processor, implements the method for random access channel RACH type selection according to any one of claims 1-21.
